# EUROPÄISCHE PATENTSCHRIFT

(11) **EP 3 597 074 B1**
(45) Veröffentlichungstag und Bekanntmachung des Hinweises auf die Patenterteilung: **29.06.2022**
(21) Anmeldenummer: 19186468.5
(22) Anmeldetag: 16.07.2019
(51) Int. Cl.: A47B 37/04, E04H 12/22, F16B 7/14, A45B 23/00

(54) **KLEMMROHR MIT KLEMMHÜLSE FÜR EINZUSTECKENDE STÄNDERROHRE**
CLAMPING TUBE WITH CLAMPING SLEEVE FOR INSERTABLE STAND TUBES
TUBE DE SERRAGE AVEC MANCHON DE SERRAGE POUR TUBES DE PIED INSÉRABLES

(30) Priorität: 20.07.2018 CH 8972018
(43) Veröffentlichungstag der Anmeldung: 22.01.2020
(73) Patentinhaber: Abegg, Hans-Peter, 8143 Stallikon (CH)
(72) Erfinder: Abegg, Hans-Peter, 8143 Stallikon (CH)
(74) Vertreter: Felber, Josef

(56) Entgegenhaltungen:
- EP-A1- 0 337 518
- DE-A1- 3 006 567
- FR-A- 589 621
- US-A1- 2005 189 005

## Beschreibung

Diese Erfindung betrifft ein Klemmrohr mit Klemmhülse für einzusteckende Ständerrohre. Dabei ist vorallem an Ständerrohre von Sonnenschirmschirmen gedacht, aber auch für alle anderen Arten von ähnlichen Rohren, die in einem Klemmrohr satt und axial auf das Klemmrohr ausgerichtet festgeklemmt werden sollen, kann dieses Klemmrohr dienen. Sonnenschirme werden oft auf Balkonen und Terrassen wie auch im Freien, in Gärten, Schwimmbändern, am Strand oder in Gartenwirtschaften aufgestellt. Sie werden hierzu meist in das Rohr eines Standsockels eingesteckt und mit einer radial in dessen Rohrwand sitzenden Klemmschraube festgeklemmt. Am Ende der Klemmschraube kann ein Schuh befestigt sein, sodass das eingesteckte Rohr über eine gewisse Strecke geklemmt wird. Es ist dann aber stets nur an dieser einen Stelle, fast punktuell, geklemmt, während das Rohr auf seiner Gegenseite gegen die dortige Innenwand des Klemmrohrs gedrückt wird, wie in einen Kännel. Das gleiche Problem stellt sich auch, wenn das Klemmrohr an einem Gebäude, zum Beispiel an einem Terrassen- oder Balkongeländer befestigt ist und das Schirmständerrohr dann darin eingesteckt und festgeklemmt werden soll. Die Sockelrohre von herkömmlichen Schirmsockeln sind für die Aufnahme von Schirmständerrohren verschiedener Dimensionen grosszügig ausgelegt, damit nicht nur eine Rohrdimension eingesteckt werden kann. Deswegen aber bleibt beim Einstecken besonders eines relativ dünnen Schirmständerrohrs ein gewisses Spiel frei. Dann wird das Schirmständerrohr wie schon beschrieben im Sockelrohr festgeklemmt. Aber diese Klemmung ist nicht befriedigend und gibt dem Schirmständerohr oftmals zu wenig festen Halt. Es kann gegenüber der idealen tiefsten Linie des vom Ständerohr innen gebildeten Kännels abweichen und steht dann schief im Ständerrohr. Entsprechend steht der Schirm erstens nicht wirklich stabil auf dem Sockel und zweitens oftmals schiefwinklig, was unansehnlich und nicht aufgeräumt und perfekt wirkt.

Sonnenschirme weisen eine relative begrenzte Lebensdauer auf. Die Sonne versengt sie - der Stoff wird mit der Zeit verblichen und brüchig, oder er wird schmutzig und unansehnlich, oder das filigrane Schirmgestänge wird zum Beispiel infolge eines Sturms verbogen oder bricht, wenn ein Sonnenschirm umfällt. Daher werden Sonnenschirme häufig durch neue ersetzt und die Käufer möchten nicht jedesmal einen neuen Schirmsockel dazu kaufen, zumal diese nicht billig sind und ausserdem wegen ihres grossen Gewichtes nicht sonderlich bequem zu verschieben sind. Wenn man davon ausgeht, dass die derzeitigen Sonnenschirm-Besitzer alle auch über bereits bestehende Sockel verfügen, so wäre ein geeignetes Klemmrohr gefragt, welches mit diesen alten Sockeln kombinierbar wäre und endlich eine perfekte Klemmung der Sonnenschirmständer sicherstellen würde, sodass diese Sonnenschirme nicht mehr wackeln und immer perfekt in axialer Richtung zum Sockelrohr verlaufend sicher gehalten sind. Aus DE 30 06 567 A1 ist eine Klemmvorrichtung bekannt, zum Verklemmen eines ersten rohrförmigen Bauteils in einer Reitersäule, das heisst einem zweiten rohrförmigen Bauteil mit grösserem Innendurchmesser als der Aussendurchmesser des ersten Bauteils. Dazu dient ein Klemmring mit radialer Klemmschraube mit aussen einem Klemmrad zum Drehen der Klemmschraube. Diese Klemmschraube wirkt auf die Aussenseite eines zylinderförmigen Klemmrings, der an einer Stelle von einem axial verlaufenden Schlitz unterbrochen ist, um den Umfang um ca. 90° von der Stelle der Klemmschraube versetzt. Auf seiner Innenseite weist der Klemmring drei um den Umfang verteilt angeordnete und gegen innen erhöhte Klemmflächen. Die Klemmschraube verläuft in einem rechten Winkel zu den Begrenzungsflächen des Schlitzes. Wird der Klemmring von aussen von der Spitze der Klemmschraube beaufschlagt, so wird er unter Verkleinerung bzw. Verschmälerung seines Schlitzes zusammengedrückt. Dieser Klemmring ist aus dem Vollen gefräst, um die Klemmflächen zu erzeugen, die sich jeweils um ca. 25° bis 35° des Umfanges erstrecken. Hierzu werden Ausnehmungen zwischen den zu erzeugenden Klemmflächen mittels einer Räumnadel von innen aus dem Klemmring ausgefräst. Der Schlitz wird so breit ausgeführt, dass er beim Verklemmen im Grenzfall geschlossen wird und dabei die Elastizitätsgrenze des Klemmrings nicht überschritten wird, sodass er also nicht bricht. Das Herstellungsverfahren für diesen Klemmring ist entsprechend aufwändig und der Klemmring erstreckt sich in axialer Richtung nur über eine geringe Distanz und bewirkt entsprechend bloss eine Verklemmung über eine kurze Distanz, sodass wohl in axialer Richtung eine hinreichende Verklemmung erzeugt wird, aber wenig Stabilität gegen eine Verschwenkung der Bauteile erzeugt wird. EP 0 337 518 A1 zeigt eine Klemmvorrichtung zum Verklemmen von zwei teleskopisch axial zueinander verschiebbaren Elementen. Dazu dient eine Klemmhülse mit axial verlaufenden Schlitzen. Eine Klemmschraube beaufschlagt einen axialen Streifen der Klemmhülse mit links und rechts einem Schlitz gegen das inliegende Rohr und den um 180° gegenüberliegenden Teil der Klemmhülse. An den beiden Seiten der Klemmhülse, also beidseits im Bereich von 90° weg von der Klemmschraube, wird keine Klemmwirkung erzeugt, wodurch die Stabilität in Bezug auf eine Verschwenkung des Rohres in der Klemmhülse reduziert ist. FR 589 621 A zeigt eine Vorrichtung zur Verklemmung von zwei Profilen mit einem dazwischen formschlüssig verlaufenden Profil. Das wird mit zwei sich kreuzenden, schraubenlinienförmig die äusseren Profile umschliegenden Stahlbändern erreicht, die mit ihren Enden an den äusseren Profilen verankert sind und mit einer Spannschraube von diesen weg spannbar sind. US 2005/0189005 A1 zeigt einen Schirmsockel für eine Schirmstützstange, die mechanisch am unteren Teil der Gehäuseanordnung mittels einer Gewindemutter oder eines gleichwertigen Gewindeteils befestigt wird, das mechanisch an der Innenbohrung des unteren Endes des Stützrohres befestigt ist. Die Mutter kann gepresst, gestiftet, geschweißt oder sonstwie dauerhaft befestigt werden. Ein Vorteil der Verwendung einer Sechskantmutter ist, dass die Spitzen des Sechskantkopfes leicht einen Oberflächenkontakt für das Einpressen oder Schweißen an der Innenfläche der Bohrung herstellen können. Durch die Verwendung eines Sechskantkopfteils werden Öffnungen zwischen den Hex-Punkten und der entsprechenden Bohrung des Stützrohres vorteilhaft erzeugt.

Die Aufgabe der vorliegenden Erfindung ist es, ein Klemmrohr zur Aufnahme von Rohren wie Schirmständerrohren anzugeben, wobei dieses Klemmrohr eine Klemmhülse für das einzusteckende Rohr aufweist, die einen satten, festen und perfekt auf die Achse des Klemmrohrs ausgerichteten Pass- und Klemmsitz bieten soll. Namentlich soll das Klemmrohr mit seiner Klemmhülse gegenüber einer Verschwenkung eines darin eingesteckten Rohres eine stark erhöhte Stabilität bieten, sodass also eine Verschwenkung praktisch verunmöglicht ist. Weiter soll die Klemmhülse dieses Klemmrohrs wesentlich preisgünstiger hergestellt werden können, vorallem für die Herstellung in grossen Stückzahlen und die Klemmhülse soll zur Aufnahme von Schirmständerrohren in die Rohre von bestehenden Schirmsockeln einsetzbar sein oder in eine andere stabile Basis als Halterung einsetzbar sein, zum Beispiel in ein Klemmrohr, das an ein Geländer, an eine Brüstung oder an eine Mauer anklemmbar oder anschraubbar ist.

Diese Aufgabe wird gelöst von einem Klemmrohr mit Klemmhülse zur Aufnahme und zum Festklemmen eines darin einzusteckenden Rohres, welches sich durch die Merkmale des Patentanspruchs 1 auszeichnet.

Anhand der Figuren wird dieses Klemmrohr und seine Funktion beschrieben. Weiter werden verschiedene Anwendungen des Klemmrohres aufgezeigt.

Dazu zeigt:
- Figur 1:: Eine Klemmhülse in perspektivischer Ansicht dargestellt; Figur 2: Eine erfindungsgemäße Klemmhülse in einem Querschnitt dargestellt, passgenau eingesteckt in ein Klemmrohr und in ihrem Innern ein Ständerohr umfassend;
- Figur 3:: Ein Klemmrohr mit der zugehörigen Klemmhülse auf einen Schirmstockel montiert, mit eingestecktem und verspannten Ständerrohr;
- Figur 4: Das Klemmrohr als Geländer-Halterung für einen Sonnenschirmständer montiert an einem Gittergeländer;
- Figur 5: Das Klemmrohr als Geländer-Halterung von der Aussenseite eines Terrassengeländers her gesehen, mit eingestecktem Schirmständer;
- Figur 6: Das Klemmrohr als Geländer-Halterung an einer Metallbrüstung eines Balkons montiert, mit separatem Metallprofil, welches an die Metallbrüstung klemmbar ist.

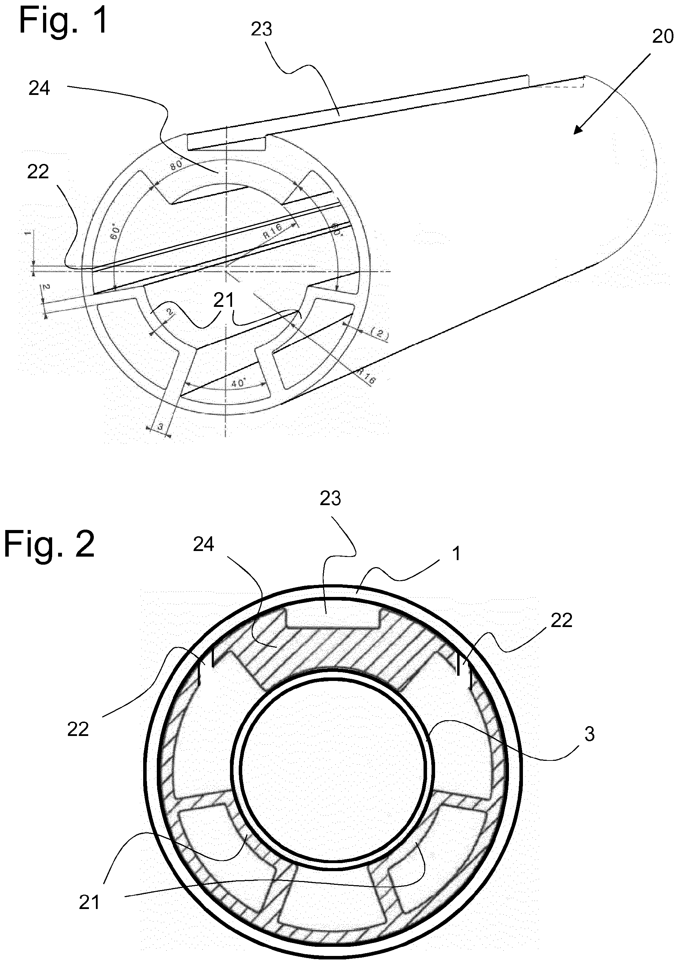

Die Figur 1 zeigt zunächst das entscheidende Element zum Klemmrohr, nämlich eine Klemmhülse 20, und zwar perspektivisch in liegender Lage. Diese Klemmhülse 20 wird als Aluminium-Strangprofil gefertigt. Sie bildet auf ihrer Innenseite drei Stützprofile 21, 24 mit konkaver Innenfläche, wovon die zwei im Bild unten dargestellten Stützprofile 21 hohl ausgeführt sind, während das im Bild oben im Zenit dargestellte Stützprofil 24 aus Vollmaterial besteht. Längs der Klemmhülse 20 verlaufend ist in seiner Hülsenwand ein Schlitz 22 von ca. 1mm Breite ausgenommen, und dieser Schlitz erstreckt sich, im Gegensatz zu der Erfindung, über die ganze Länge der Klemmhülse 20. Wie man aus der Figur 1 erkennt, erstreckt sich im gezeigten Beispiel das Stützprofil 24 aus Vollmaterial um 80° längs des Innenumfangs der Hülsenwand und verläuft axial längs derselben bis zum anderen Ende der Klemmhülse 20, und die Abschnitte des Hülsenrohr-Umfanges, die beidseits des Vollmaterial-Stützprofils 24 anschliessen, erstrecken sich über je 60° des Umfangs. Die hohlen Stützprofile 21 erstrecken sich über 40° des Umfangs des Hülsenrohrs, sodass der Umfangsbereich zwischen ihnen noch 40° umfasst. Die Innenseiten der Stützprofile sind konkav geformt, bilden also je einen Kännel und diese Kännel passen im Wesentlichen auf ein Rohr, welches passgenau zwischen die Stützprofile eingesetzt wird, und sie umschliessen dieses mit nur wenig Spiel über die ganze Länge der Klemmhülse 20. In der Aussenseite der Hülsenwand ist eine Nut 23 ausgenommen. Auf diese wirkt eine Klemmschraube in radialer Richtung und drückt somit das Stützprofil 24 aus Vollmaterial gegen das eingesteckte Rohr, wobei sich der Schlitz 22 ein stückweit schliesst, und das Rohr wird auf seiner gegenüberliegenden Seite von den beiden hohlen Stützprofile 21 umfasst und abgestützt. So kann eine satte Klemmung über die ganze Länge der Klemmhülse, also zum Beispiel über 25cm bewirkt werden. Diese starke, satte Verklemmung sorgt dafür, dass das inliegende Rohr genau auf der Achse des Klemmhülse verläuft und in seinem Klemmsitz sehr stark und unverrückbar gehalten ist.

Die Figur 2 zeigt einen Querschnitt des gesamten Klemmrohres 1 mit der darin mit ihrer Aussenseite passgenau sitzenden Klemmhülse 20, die hier schraffiert gezeichnet ist. Das Klemmrohr 1 kann aus verschiedenen Materialien hergestellt sein, aber damit es dauerhaft wetterbeständig ist, eignet sich ein verzinktes Stahlrohr. Wenn das Klemmrohr 1 ausserdem auch edel und hochwertig aussehen soll, empfiehlt sich eine Herstellung aus Chromstahl. Im Innern der Klemmhülse 20 steckt das in ihr einzuklemmende Rohr 3, etwa das Ständerrohr eines Sonnenschirms. Die hier gezeigte Klemmhülse 20 weist zwei Schlitze 22 auf, die in einem ca. 45°-Winkel zur Hülsenwandung angeordnet sind. Sie erstrecken sich nicht über die ganze Hülsenlänge, sonst würde die Klemmhülse der Länge nach in zwei Teile zerfallen.

Vielmehr lässt sie bei einer zum Beispiel 25cm langen Klemmhülse einige cm stehen und an dieser Stelle bleibt die Klemmhülse 20 intakt und sie wird über ihre ganze Länge zusammengehalten.

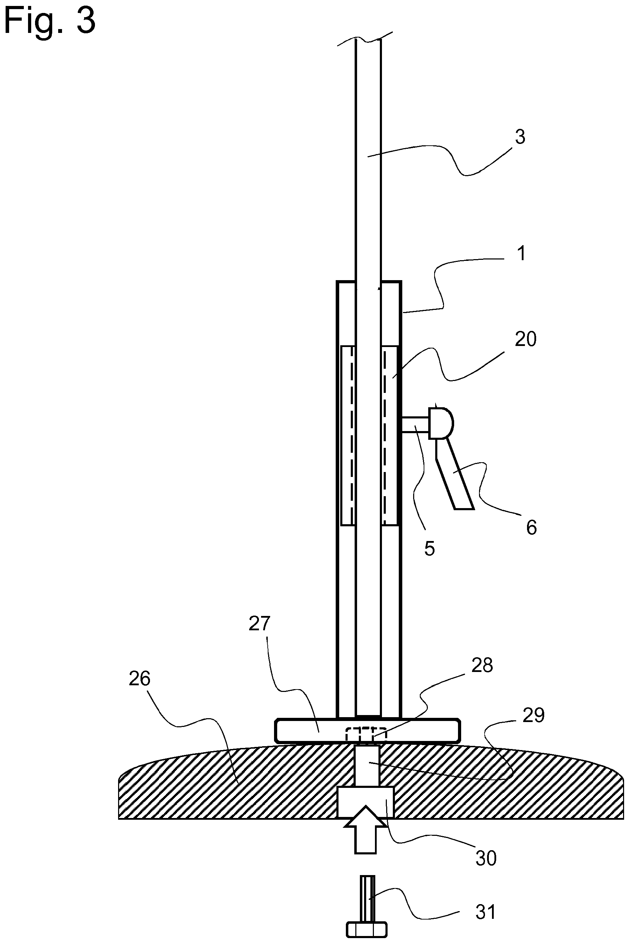

Die Figur 3 zeigt das Klemmrohr 1 in einer Anwendung, indem es hier mit einem Schirmsockel 26 verspannt ist. Hierzu ist das Klemmrohr 1 an seinem hier unteren Ende mit einem Flansch 27 ausgerüstet, sodass es also eine rundum radial abstehende Auskragung aufweist, mit der das Klemmrohr 1 auf der Oberseite eines Sockels 26 abgestützt ist. In seinem Innern ist das Klemmrohr 1 unten mit einer Kontermutter 28 oder einer Gewindehülse ausgerüstet, die in das Innere eingeschweisst sein kann, sodass das Klemmrohr 1 also unten mit einem Innengewinde endet. Der Schirmsockel 26 weist ein zentrales Loch 29 auf, das unten in ein Sackloch 30 führt. Von unten kann daher eine Metallschraube 31 eingeführt und mit der Kontermutter 28 oder der Gewindehülse im Klemmrohr 1 satt verspannt werden. Damit ist das Klemmrohr 1 sehr stabil auf dem Sockel 26 gehalten. Die Klemmhülse 20 des Klemmrohrs 1 sitzt passgenau in seinem Innern. Damit die Klemmhülse im Klemmrohr 1 nicht nach unten fällt oder mit der Zeit nach unten rutscht, kann eine Madenschraube radial ins Klemmrohr 1 geschraubt sein, die dann einen Anschlag für die von oben eingesteckte Klemmhülse bietet.

Die Klemmhülsen 20 werden in verschiedenen Dimensionen, angepasst an die Aussendurchmesser der einzusteckenden Rohre bzw. Schirmständerrohre 3 hergestellt. Es erweist sich als vorteilhaft, wenn der Innendurchmesser, gebildet von den konkaven Stützflächen der Stützprofile 21, 24 jeweils 1mm mehr misst als der Aussendurchmesser des einzusteckenden Rohres 3. Für ein Rohr 3 mit 25mm Aussendurchmesser soll der Innendurchmesser der Klemmhülse also 26mm messen, für ein Rohr 3 mit 30mm dann 31mm, für ein Rohr 3 mit 32mm dann 33mm, für ein Rohr 3 mit 35mm Aussendurchmesser soll der Innendurchmesser 36mm messen und für ein Rohr 3 mit 38mm und 39mm Aussendurchmesser kann der Innendurchmesser der Klemmhülse 20 in beiden Fällen 39mm betragen. Ein Schirmständerrohr 3 wird also wie in Figur 3 gezeigt von oben in das Klemmrohr 1 eingeführt und in die darin befindliche Klemmhülse 20 eingesteckt. Es kann bis ganz unten gesteckt werden, oder je nach Bedarf auch nur über einen Abschnitt des Klemmrohres 1, sollte aber immer bis zum unteren Ende der Klemmhülse 20 eingesteckt werden, damit diese ihre volle Klemmkraft entfalten kann. Jetzt wird die Klemmschraube 5 durch Drehen des Klemmgriffes 6 festgezogen und damit drückt das Ende der Klemmschraube 5 radial auf die Nut 23 des Klemmprofils 20. In der Folge wird das in der Klemmhülse 20 sitzende Rohr 3 darin satt und fest verspannt, wie das bisher nie zuvor in dieser Weise realisiert wurde.

Der grosse Vorteil dieser Konstruktion liegt auch darin, dass dieses Klemmrohr 1 an allen bestehenden Schirmsockeln 26 einsetzbar ist bzw. diese damit nachrüstbar sind. Sie müssen bloss ein zentrales Loch aufweisen, was in den allermeisten Fällen zutrifft. Alte Schirmsockel mit einbetonierten Sockelrohren können auch umgerüstet werden. Man schneidet einfach das Sockelrohr oben bündig mit der Oberfläche des Schirmsockels weg und setzt dann das Klemmrohr 1 wie beschrieben auf und verschraubt es mit dem Sockel. Wird also eine neuer Sonnenschirm gekauft, so kann zugleich auch ein neues solches Klemmrohr 1 dazugekauft werden, sodass hernach der Sonnenschirm auch ordentlich aufgestellt werden kann, bolzensenkrecht, wackelfrei und stabil, auch am alten Sockel, der meistens nicht ausgetauscht wird. Dieses Klemmrohr 1 eignet sich auch für Sockel, die mit einem pneumatisch ausfahrbarem Fahrwerk ausgerüstet sind, wie solche Fahrwerke zum Heben und Verschieben von schweren Objekten aus der WO 2014/161097 A1 bekannt wurden.

Das Klemmrohr 1 ist aber auch an ein Geländer oder an eine Wand montierbar und ermöglicht hernach das Einstecken und Festklemmen eines Sonnenschirms. Es ist dann von mindestens zwei Rohrschellen umfasst, die über einen Steg mit je einer weiteren Rohrschelle versehen ist, zum Festschrauben der freiliegenden Rohrschellen an einem Geländerteil oder an einem separat an einer Geländerbrüstung festklemmbaren Profil.

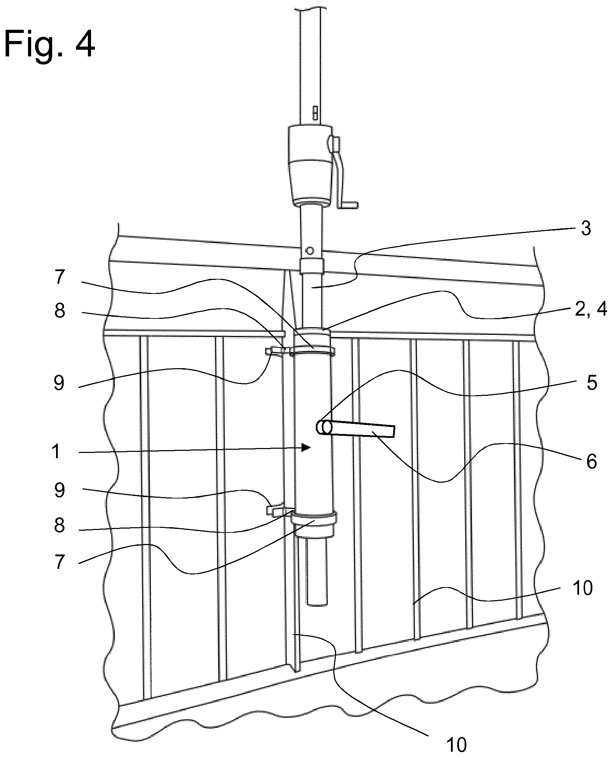

Die Geländer-Halterung besteht im Grundsatz aus dem Klemmrohr 1, in welches ein Schirmständer mit wenig Spiel einsteckbar ist, wie das in Figur 4 gezeigt ist. Dieses Klemmrohr 1 von ca. 20 cm bis 60 cm Länge besteht vorteilhaft aus Aluminium oder Chromstahl. Stattdessen kann es in einer einfacheren Ausführung auch aus einem einfachen Stahlrohr gefertigt sein, das dann pulverbeschichtet wird oder mindestens mit einem Schutzanstrich versehen wird, um dem Rosten vorzubeugen. Eine favorisierte Ausführung ist aber jene aus Aluminium oder Chromstahl, weil das eine hochwertige und entsprechend ästhetisch überzeugende Lösung bietet. In weiteren Varianten kann das Klemmrohr auch aus Holz oder Bambus gefertigt sein, oder auch aus Kunststoff oder Plexiglas.

Die Klemmhülse im Innern des Klemmrohrs umfasst das eingesteckte Schirmständerrohr 3 satt. Die Klemmhülse 20 weist auf seiner oberen Seite einen auskragenden Rand 4 auf, welcher verhindert, dass sie bei nicht eingestecktem Schirmständerrohr 3 nach unten durch das Klemmrohr 1 herausrutschen kann. Wie hier ersichtlich führt eine Spannschraube 5 radial von aussen durch die Wandung des Klemmrohrs 1 und des Kunststoff-Einsatzrohres 2. Im gezeigten Beispiel handelt es sich um eine einzige Spannschraube 5 etwa in der Mitte der Länge des Klemmrohrs 1, und die Spannschraube 5 ist an ihrem äusseren Ende mit einem Spanngriff 6 ausgerüstet. Indessen kann es sich auch um ein Griffrad zum Spannen handeln. Im Fall einer Büchse aus Holz, Bambus, Kunststoff oder Plexiglas wird die radiale Bohrung durch die Büchsenwandung für die Spannschraube mit einer Metall-Gewindebüchse verstärkt, die auf ihrer Innenseite, eine kleine Auskragung aufweist, damit sie sich auf der Innenwand des Klemmrohrs 1 abstützen kann. Anstelle einer einzigen Spannschraube 5 können auch mehrere Spannschrauben an verschiedenen Stellen des Klemmrohrs 1 vorgesehen werden, um eine noch stärkere Verklemmung zu gewährleisten. Gerade bei grösser dimensionierten Schirmen mit stärkeren Ständer-Rohren kann das sinnvoll sein. Wie hier gezeigt wird das Klemmrohr 1 im oberen und unteren Endbereich von je einer Rohrschelle 7 umfasst. Ab diesen Rohrschellen 7 führt je ein Steg 8 radial weg zu einer weiteren, freien Rohrschelle 9. Mit diesen freien Rohrschellen 9 lässt sich das Klemmrohr 1 an einem Geländer-Gitterstab 10 fest verspannen. Diese frei abstehenden Rohrschellen 9 sind so gross dimensioniert, dass sie sowohl an relativ dicken Geländerpfosten wie auch an dünneren Gitterstäben 10 gleich welchen Querschnittprofils angelegt und verspannt werden können. Die Klemmteile der freien Rohrschellen 9 können kreisbogenförmig oder V-förmig oder an ganz bestimmte Gitterstabprofile angepasst geformt sein. Die äusseren Klemmteile der Rohrschellen können ausserdem um 180° angesetzt werden, sodass dann die beiden Rohrschellenteile bis zu satt aneinanderliegend miteinander verspannt werden können. Es können dann dünne Rundstäbe oder Gitterstäbe mit bloss ca. 5 mm Stärke oder weniger satt eingeklemmt werden und es kann mit ihnen eine starke Verspannung erzeugt werden. Zur Schonung der Gitterstäbe oder Pfosten können diese Rohrschellen 9 innen mit einer Gummieinlage ausgerüstet sein oder beschichtet sein.

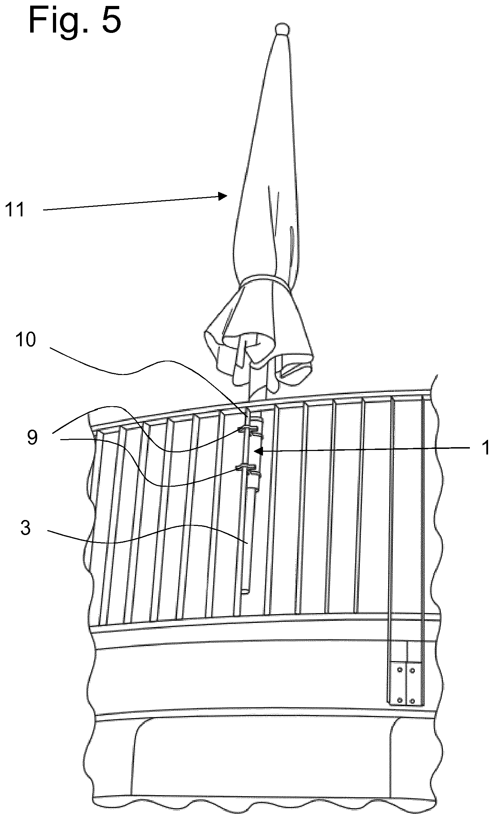

In Figur 5 sieht man eine solche Geländer-Halterung von ausserhalb des Gebäudes mit Blick an die Geländerbrüstung gesehen an derselben montiert. Man erkennt hier die freien Rohrschellen 9, mit denen die Geländer-Halterung und ihre Büchse 1 an den vertikal verlaufenden Gitterstäben 10 des Geländers festgeschraubt ist. Es ist hier ein Schirm 11 mit seinem Ständerrohr 3 in das Klemmrohr 1 eingesteckt, wobei der Schirm 11 in geschlossenem Zustand dargestellt ist. Das Ständerrohr 3 des Schirms 11 lässt sich im Klemmrohr 1 nach Lösen der Spannschraube auf- und abwärts verschieben und in beliebigen Höhenlagen festklemmen. Ausserdem ist es klar, dass das Ständerohr 3 auch um seine Längsachse in Klemmrohr 1 rotiert werden kann. Gerade für Schirme 11, die auf dem Ständerrohr 3 auf eine Seite hin neigbar sind, erweist sich das als Vorteil, indem der Schirm 11 der Sonne nachgeführt werden kann, um an der gewünschten Stelle Schatten zu spenden.

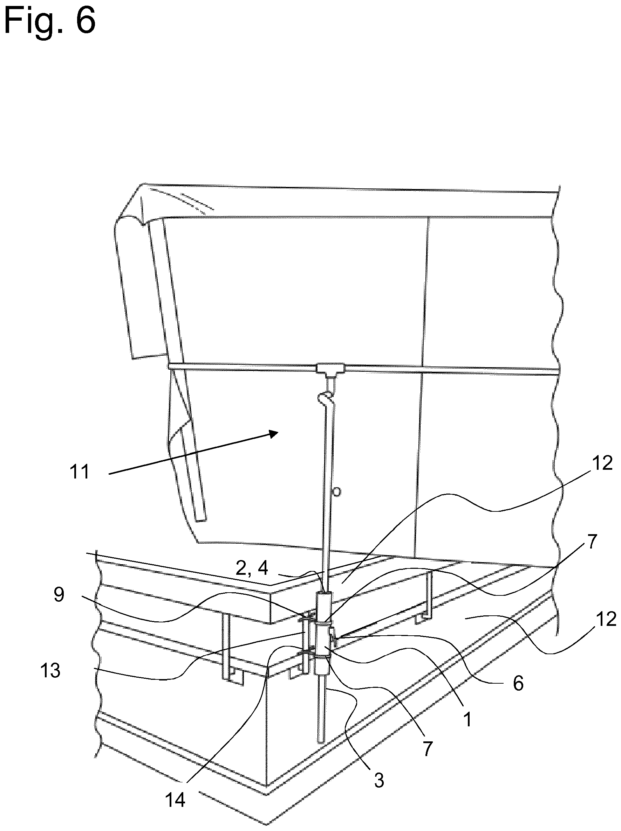

Die Figur 6 zeigt eine solche Geländer-Halterung für einen Sonnenschirm moniert an einer Geländerbrüstung aus horizontal verlaufenden Stahl-Paneelen 12. Die äusseren freien Rohrschellen 9 umfassen hier ein Aluminium-, Chromstahl-, oder Stahlprofil 13. Dieses Profil 13 ist mit zwei gesonderten Klemmhalterungen 14 an die Stahlpaneelen 12 des Geländers festklemmbar. Damit ist das Klemmrohr 1 ebenfalls stabil am Geländer verspannt.

Noch erwähnt sei, dass ohne das äussere Klemmteil an der freien Rohrschelle diese auch an eine Wand oder Mauer angeschraubt werden kann. Zum Beispiel können in eine Betonwand oder-mauer Löcher gebohrt werden, Dübel eingesetzt und dann dieses eine Klemmteil der freien Rohrschelle 9 mittels Dübelschrauben sehr solide und kräftig an die Betonmauer geschraubt werden. Gleichermassen kann das innere Klemmteil der äusseren Rohrschelle 9 auch an eine Holzbrüstung oder Holzwand oder einen Holzpfosten geschraubt werden.

Diese Klemmrohr und die spezifischen Klemmhülse kann auch in weit grösseren Ausführungen als hier dargestellt. So kann es zum Beispiel zum Verbinden von rohrförmigen Leitplankenabschnitten eingesetzt werden. Von beiden Seiten wird in das horizontale verlaufende Klemmrohr ein Leitplankenrohr eingesteckt, auf Stoss mit dem von der Gegenseite her eingesteckten. Dann werden die beiden Leitplankenrohre mit der inliegenden Klemmhülse verklemmt. Für solche Anwendungen eignen sich dann Klemmrohre aus verzinktem Stahl. Die Dimensionen sind eigentlich frei wählbar, auch für noch grössere Anwendungen, bei welchen zum Beispiel mittels eines hydraulischen Bolzens geklemmt wird, statt mit einer Spannschraube 6.

### Ziffernverzeichnis

- 1: Klemmrohr
- 2: Kunststoff-Einsatzrohr
- 3: Ständerrohr
- 4: Auskragender Rand Kunststoffrohr
- 5: Klemmschraube/Spannschraube
- 6: Griff für Klemmschraube/Spannschraube
- 7: Rohrschelle
- 8: Steg
- 9: Rohrschelle
- 10: Gitterstäbe
- 11: Schirm
- 12: Stahl-Paneelen
- 13: Stahlprofil
- 14: Klemmhalterungen
- 15: X
- 16: X
- 17: X
- 18: X
- 19: X
- 20: Klemmhülse
- 21: Stützprofile im Innern der Klemmhülse
- 22: Längsschlitz in Klemmhülse, nicht über ganze Länge
- 23: Axiale Nut aussen an der Klemmhülse
- 24: Vollmaterial-Stückprofil im Innern der Klemmhülse
- 25: Längsschlitz in Klemmhülse, nicht über ganze Länge
- 26: Schirmsockel
- 27: Flansch am unteren Ende des Klemmrohrs 1
- 28: Gewindemutter/Gewindehülse im unteren Ende des Klemmrohrs 1
- 29: Zentrales Loch im Schirmsockel
- 30: Sackloch in Unterseite Schirmsockel
- 31: Schraube zum Verspannen des Klemmrohrs 1 mit dem Sockel 26

## Patentansprüche

1. Klemmrohr (1) zur Aufnahme und zum Festklemmen eines darin einzusteckenden Rohres (3), wobei im Innern des Klemmrohres (1) eine Klemmhülse (20) passgenau eingeführt ist, welche auf ihrer Innenseite mindestens drei gegen innen gerichtete Stützprofile (21, 24) ausformt, wobei die Klemmhülse (20) an mindestens einer Stelle einen in Längsrichtung über einen Teil ihrer Länge sich erstreckenden Schlitz (22) aufweist, sodass die Klemmhülse (20) durch Beaufschlagen ihrer Aussenseite mit einer radial durch die Wand des Klemmrohres (1) geführten und von aussen festziehbaren Klemmschraube (5) an der Stelle eines Stützprofils (24) elastisch unter Verschmälern des Schlitzes (22) zusammendrückbar ist und die Stützprofile (21, 24) dadurch das eingesteckte Rohr (3) längs der Bereiche der Stützprofile (21, 24) rundum satt einklemmen, **dadurch gekennzeichnet, dass** die Klemmhülse (20) ein Aluminium-Strangprofil ist, mit auf seiner Innenseite auf einer Umfangshälfte zwei voneinander längs der Umfangslinie beabstandeten, axial verlaufenden hohlen Stützprofilen (21) mit konkaven Innenflächen und einem diesen beiden Stützprofilen (21) auf der Innenseite der Klemmhülse (20) gegenüberliegendem, axial verlaufenden Stützprofil (24) aus Vollmaterial mit ebenfalls konkaver Innenfläche, wobei auf der Aussenseite der Klemmhülse (20) aus diesem Stützprofil (24) aus Vollmaterial eine axial verlaufende Nut ausgenommen ist, für die Aufnahme der von aussen radial auf das Stützprofil (24) wirkenden Klemmschraube (5), und dass beidseits des Stützprofils (24) aus Vollmaterial je ein Schlitz (22) in der Klemmhülse (20) verläuft, sodass mit dem von der Klemmschraube (5) beaufschlagten Stützprofil (24) durch dessen radiale Relativverschiebung zum Klemmrohr (1) das in die Klemmhülse (20) eingesteckte Rohr (3) mit den jenseits liegenden zwei Stützprofilen (21) verspannbar ist.

2. Klemmrohr (1) zur Aufnahme und zum Festklemmen eines darin einzusteckenden Rohres nach Anspruch 1, **dadurch gekennzeichnet, dass** es zum Befestigen auf einem Sockel (26) mit durchgehendem Loch (29), das auf der Unterseite des Sockels (26) in ein Sackloch (30) mündet, seinem einen Ende in seinem Innern mit einer Gewindemutter (28) oder einer Gewindehülse ausgerüstet ist, die fest mit dem Klemmrohr (1) verbunden ist, und das Klemmrohr (1) an diesem Ende mit einem Flansch (27) ausgerüstet ist, welcher einen allseits ausragendem Rand zur Auflage auf der Oberseite eines Sockels (26) bildet, sodass die Gewindemutter (28) oder die Gewindehülse des Klemmrohrs (1) mittels einer von unten im Sockel (26) in dessen Sackloch (30) und Loch (29) einzuführenden Schraube (31) verschraubbar und verspannbar ist.

3. Klemmrohr (1) zur Aufnahme und zum Festklemmen eines darin einzusteckenden Rohres (3) nach einem der vorangehenden Ansprüche, **dadurch gekennzeichnet, dass** die Begrenzungsflächen der Schlitze (22) beidseits des Stützprofils (24) aus Vollmaterial in der gleichen Richtung verlaufen wie die Klemmschraube (5) im Klemmrohr (1).

4. Klemmrohr (1) zur Aufnahme und zum Festklemmen eines darin einzusteckenden Rohres (3) nach einem der vorangehenden Ansprüche, **dadurch gekennzeichnet, dass** es in seinem Innern einen Anschlag aufweist, zur Sicherung der eingesteckten Klemmhülse (20) an einer bestimmten Stelle.

5. Klemmrohr (1) zur Aufnahme und zum Festklemmen eines darin einzusteckenden Rohres (3) nach einem der vorangehenden Ansprüche, **dadurch gekennzeichnet, dass** die Klemmschraube (5) am Klemmrohr (1) an ihrem äusseren Ende mit einem Handgriff (6) oder einem Handrad ausgerüstet ist, zum werkzeuglosen Verspannen.

6. Klemmrohr (1) zur Aufnahme und zum Festklemmen eines darin einzusteckenden Rohres (3) nach einem der vorangehenden Ansprüche, **dadurch gekennzeichnet, dass** das Klemmrohr (1) ein Chromstahlrohr ist und auf seiner als oberes Ende bestimmten Seite einen Abschluss-Kappendeckel mit zentralem Loch aus Kunststoff, Holz oder Metall von der Dimension des einzusteckenden Rohres (3) aufweist.

7. Klemmrohr (1) zur Aufnahme und zum Festklemmen eines darin einzusteckenden Rohres (3) nach einem der Ansprüche 1 bis 5, **dadurch gekennzeichnet, dass** das Klemmrohr (1) ein verzinktes oder pulverbeschichtetes Stahlrohr ist.

8. Klemmrohr (1) zur Aufnahme und zum Festklemmen eines darin einzusteckenden Rohres (3) nach einem vorhergehenden Ansprüche, **dadurch gekennzeichnet, dass** es von mindestens zwei Rohrschellen (7) umfasst ist, die über einen Steg (8) mit je einer weiteren Rohrschelle (9) versehen ist, zum Festschrauben der freiliegenden Rohrschellen (9) an einem Geländerteil oder an einem separat an einer Geländerbrüstung festklemmbaren Profil.

9. Klemmrohr (1) zur Aufnahme und zum Festklemmen eines darin einzusteckenden Rohres (3) nach einem der Ansprüche 1 bis 5, **dadurch gekennzeichnet, dass** die Klemmhülse (20) aus Holz, Bambus oder Kunststoff gefertigt ist.

## Claims

1. A clamping tube (1) for receiving and clamping a tube (3) to be inserted therein, wherein a clamping sleeve (20) is inserted in a precisely fitting manner in the interior of the clamping tube (1), which sleeve forms at least three inwardly directed support profiles (21, 24) on its inner side, wherein the clamping sleeve (20) has at at least one point a slot (22) extending in the longitudinal direction over part of its length, so that the clamping sleeve (20) can be elastically compressed at the location of a support profile (24) by acting on its outside with a clamping screw (5) which is guided radially through the wall of the clamping tube (1) and can be tightened from the outside, while narrowing the slot (22), and the support profiles (21, 24) thereby clamp the inserted tube (3) snugly all round along the regions of the supporting profiles (21, 24), **characterized in that** the clamping sleeve (20) is an extruded aluminium profile having on its inner side on one circumferential half two axially extending hollow support profiles (21), which are spaced apart from one another along the circumferential line and have concave inner surfaces, and an axially extending support profile (24) of solid material, which lies opposite these two support profiles (21) on the inner side of the clamping sleeve (20) and likewise has a concave inner surface, wherein an axially extending groove is cut out of this support profile (24) of solid material on the outer side of the clamping sleeve (20), for receiving the clamping screw (5) acting radially from the outside on the supporting profile (24), and **in that** a slot (22) runs in each case in the clamping sleeve (20) on both sides of the supporting profile (24) made of solid material, so that the tube (3) inserted into the clamping sleeve (20) can be braced with the two supporting profiles (21) lying on the other side with the supporting profile (24) acted upon by the clamping screw (5) by means of its radial displacement relative to the clamping tube (1).

2. Clamping tube (1) for receiving and clamping a tube to be inserted therein according to claim 1, **characterised in that**, for fastening on a base (26) with a through hole (29) which opens into a blind hole (30) on the underside of the base (26), it is equipped at one end in its interior with a threaded nut (28) or a threaded sleeve which is firmly connected to the clamping tube (1), and the clamping tube (1) is equipped at this end with a flange (27) which forms a rim projecting on all sides for resting on the upper side of a base (26), so that the threaded nut (28) or the threaded sleeve of the clamping tube (1) can be screwed and braced by means of a screw (31) to be inserted from below in the base (26) into its blind hole (30) and hole (29).

3. Clamping tube (1) for receiving and clamping a tube (3) to be inserted therein according to one of the preceding claims, **characterised in that** the boundary surfaces of the slots (22) on both sides of the support profile (24) of solid material extend in the same direction as the clamping screw (5) in the clamping tube (1).

4. Clamping tube (1) for receiving and clamping a tube (3) to be inserted therein according to one of the preceding claims, **characterised in that** it has a stop in its interior for securing the inserted clamping sleeve (20) at a specific position.

5. Clamping tube (1) for receiving and clamping a tube (3) to be inserted therein according to one of the preceding claims, **characterised in that** the clamping screw (5) on the clamping tube (1) is equipped at its outer end with a handle (6) or a hand wheel for tool-free clamping.

6. Clamping tube (1) for receiving and clamping a tube (3) to be inserted therein according to one of the preceding claims, **characterised in that** the clamping tube (1) is a chromium steel tube and has on its side intended as the upper end an end cap with a central hole of plastic, wood or metal of the dimension of the tube (3) to be inserted.

7. Clamping tube (1) for receiving and clamping a tube (3) to be inserted therein according to one of claims 1 to 5, **characterised in that** the clamping tube (1) is a galvanised or powder-coated steel tube.

8. Clamping tube (1) for receiving and clamping a tube (3) to be inserted therein according to one of the preceding claims, **characterised in that** it is surrounded by at least two tube clamps (7), which are each provided with a further tube clamp (9) via a web (8), for screwing the exposed tube clamps (9) to a railing part or to a profile which can be clamped separately to a railing parapet.

9. Clamping tube (1) for receiving and for clamping a tube (3) to be inserted therein according to one of the claims 1 to 5, **characterised in that** the clamping sleeve (20) is made of wood, bamboo or plastic.

## Revendications

1. Tube de serrage (1) destiné à recevoir et à serrer un tube (3) à insérer dans celui-ci, une douille de serrage (20) étant introduite avec précision à l'intérieur du tube de serrage (1), laquelle forme sur sa face intérieure au moins trois profilés d'appui (21, 24) dirigés vers l'intérieur, la douille de serrage (20) présentant en au moins un endroit une fente (22) s'étendant dans le sens longitudinal sur une partie de sa longueur, de sorte que la douille de serrage (20) peut être comprimée élastiquement à l'endroit d'un profilé d'appui (24) en rétrécissant la fente (22) par sollicitation de son côté extérieur avec une vis de serrage (5) guidée radialement à travers la paroi du tube de serrage (1) et pouvant être serrée de l'extérieur, et que les profilés d'appui (21, 24) serrent ainsi fermement le tube (3) inséré tout autour le long des zones des profilés de support (21, 24), **caractérisé en ce que** la douille de serrage (20) est un profilé extrudé en aluminium, avec sur son côté intérieur, sur une moitié de la circonférence, deux profilés d'appui creux (21) s'étendant axialement, espacés l'un de l'autre le long de la ligne circonférentielle, avec des surfaces intérieures concaves, et un profilé d'appui (24) s'étendant axialement, opposé à ces deux profilés d'appui (21) sur le côté intérieur de la douille de serrage (20), en matériau plein, avec une surface intérieure également concave, une rainure s'étendant axialement étant évidée sur le côté extérieur de la douille de serrage (20) dans ce profilé d'appui (24) en matériau plein, pour recevoir la vis de serrage (5) agissant radialement de l'extérieur sur le profilé d'appui (24), et **en ce que**, de part et d'autre du profilé d'appui (24) en matériau plein, une fente (22) s'étend dans la douille de serrage (20), de sorte qu'avec le profilé d'appui (24) sollicité par la vis de serrage (5), le tube (3) inséré dans la douille de serrage (20) peut être serré avec les deux profilés d'appui (21) situés de l'autre côté, grâce à son déplacement radial relatif par rapport au tube de serrage (1).

2. Tube de serrage (1) destiné à recevoir et à serrer un tube à y insérer selon la revendication 1, **caractérisé en ce que**, pour être fixé sur une embase (26) à trou traversant (29) débouchant sur un trou borgne (30) sur la face inférieure de l'embase (26), il est équipé à l'une de ses extrémités, à l'intérieur, d'un écrou (28) ou d'une douille filetée solidaire du tube de serrage (1), et le tube de serrage (1) est équipé à cette extrémité d'une bride (27) qui forme un bord faisant saillie de tous côtés pour s'appuyer sur la face supérieure d'un socle (26), de sorte que l'écrou fileté (28) ou la douille filetée du tube de serrage (1) peut être vissé et serré au moyen d'une vis (31) à introduire par le bas dans le socle (26) dans son trou borgne (30) et son trou (29).

3. Tube de serrage (1) destiné à recevoir et à serrer un tube (3) à y insérer selon l'une des revendications précédentes, **caractérisé en ce que** les surfaces de délimitation des fentes (22) de part et d'autre du profilé de support (24) en matériau plein s'étendent dans la même direction que la vis de serrage (5) dans le tube de serrage (1).

4. Tube de serrage (1) destiné à recevoir et à serrer un tube (3) à insérer dans celui-ci selon l'une des revendications précédentes, **caractérisé en ce qu'**il présente à l'intérieur une butée pour bloquer la douille de serrage (20) insérée à un endroit déterminé.

5. Tube de serrage (1) destiné à recevoir et à serrer un tube (3) à insérer dans celui-ci selon l'une des revendications précédentes, **caractérisé en ce que** la vis de serrage (5) sur le tube de serrage (1) est équipée à son extrémité extérieure d'une poignée (6) ou d'un volant, pour un serrage sans outil.

6. Tube de serrage (1) destiné à recevoir et à serrer un tube (3) à insérer dans celui-ci selon l'une des revendications précédentes, **caractérisé en ce que** le tube de serrage (1) est un tube en acier chromé et présente sur son côté destiné à l'extrémité supérieure un couvercle de fermeture avec un trou central en plastique, bois ou métal de la dimension du tube (3) à insérer.

7. Tube de serrage (1) destiné à recevoir et à serrer un tube (3) à y insérer selon l'une des revendications 1 à 5, **caractérisé en ce que** le tube de serrage (1) est un tube en acier galvanisé ou revêtu par poudre.

8. Tube de serrage (1) destiné à recevoir et à serrer un tube (3) à insérer dans celui-ci selon l'une des revendications précédentes, **caractérisé en ce qu'**il est entouré d'au moins deux colliers de serrage (7) qui sont pourvus chacun d'un autre collier de serrage (9) par l'intermédiaire d'une entretoise (8), pour visser les colliers de serrage (9) exposés à un élément de garde-corps ou à un profilé pouvant être serré séparément sur un parapet.

9. Tube de serrage (1) destiné à recevoir et à serrer un tube (3) à y insérer selon l'une des revendications 1 à 5, **caractérisé en ce que** la douille de serrage (20) est fabriquée en bois, en bambou ou en matière plastique.
